# EUROPEAN PATENT SPECIFICATION

(11) **EP 0 875 877 B1**
(45) Date of publication and mention of the grant of the patent: **30.06.2004**
(21) Application number: 98107642.5
(22) Date of filing: 27.04.1998
(51) Int. Cl.: G08G 1/0968, G01C 21/20

(54) **Navigation system**
Navigationssystem
Système de navigation

(30) Priority: 02.05.1997 JP 11481897
(43) Date of publication of application: 04.11.1998
(73) Proprietor: PIONEER ELECTRONIC CORPORATION, Meguro-ku, Tokyo (JP)
(72) Inventor: Kaneko, Hitoshi, c/o Pioneer Electronic Corp., Ohaza Yamada, Kawagoe-shi, Saitama (JP); Ishiguro, Motoki, c/o Pioneer Electronic Corp., Ohaza Yamada, Kawagoe-shi, Saitama (JP); Hashida, Masaya, c/o Pioneer Electronic Corp., Ohaza Yamada, Kawagoe-shi, Saitama (JP); Osozawa, Satoshi, c/o Pioneer Electronic Corp., Ohaza Yamada, Kawagoe-shi, Saitama (JP)
(74) Representative: Betten & Resch

(56) References cited:
- PATENT ABSTRACTS OF JAPAN vol. 1995, no. 01, 28 February 1995 (1995-02-28) & JP 06 300579 A (FUJITSU TEN LTD), 28 October 1994 (1994-10-28)
- PATENT ABSTRACTS OF JAPAN vol. 018, no. 333 (P-1759), 23 June 1994 (1994-06-23) & JP 06 082261 A (FUJITSU TEN LTD), 22 March 1994 (1994-03-22)

## Description

The present invention relates to a navigation system for detecting a current position of a moving vehicle.

### Description of the Related Art

There is a known vehicle-mounted navigation system, see e.g. JP-A-05 086480, that displays a vehicle's own position mark indicative of a current position to be displayed on a display together with a map around the current position while presuming the current position of the vehicle by utilizing a dead-reckoning navigation or the like.

In this system, the presumed position of the vehicle obtained by the dead-reckoning navigation is not always on a road because of the existence of measurement errors. Moreover, a deviation develops due to accumulative error that is accumulated while the vehicle travels for a predetermined distance. Therefore, the navigation system is designed to perform "map matching" in order to correct this deviation.

In the map matching, a presumed current position of the vehicle is detected by the dead-reckoning navigation at first. Then, all of roads in a predetermined distance range from the presumed current position are retrieved from the map data, and a position on a road having the highest existence probability of the vehicle, for example, a road existing at the position closest to the presumed current position among the retrieved roads is derived as an ultimate current position of the vehicle.

However, there is a problem that a response of the display of the vehicle' own position mark which follows the movement of the vehicle is deteriorated when the map matching process is performed, since a long time is consumed for the map matching process itself. Furthermore, there also is a problem that the map matching process slows the process of another program (for example, a route searching program, a traffic jam information processing program, or the like) which is executed concurrently.

When the map matching process is executed when the vehicle enters a road, a parking, or the like which is not registered as map data, there arises a problem that the current position is erroneously pulled into a road near the current position (road registered as map data).

### OBJECTS AND SUMMARY OF THE INVENTION

It is, therefore, an object of the invention to provide a navigation system which can accurately detect a current position of a moving vehicle at a high speed and allow the current position to be displayed on a map while executing a position correction by a map matching process.

According to the invention, there is provided a navigation system as claimed in claim 1.

### BRIEF DESCRIPTION OF THE DRAWINGS

Fig. 1 is a diagram showing the structure of a navigation system according to the invention;
Fig. 2 is a diagram showing an initial current position detecting routine;
Fig. 3 is a diagram showing the storage contents in each of built-in registers A to F of a CPU 7;
Fig. 4 is a diagram for explaining an operation example by a map matching process;
Fig. 5 is a diagram showing a current position detecting routine; and
Fig. 6 is a diagram showing an example of a narrow area map matching processing routine.

### DETAILED DESCRIPTION OF THE PREFERRED EMBODIMENT

An embodiment of the invention will be described in detail hereinafter with reference to the drawings.

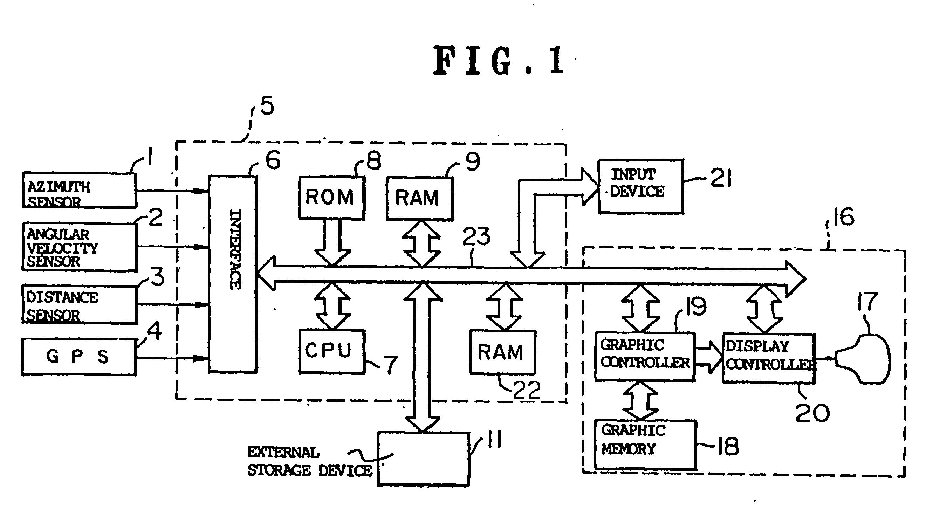

Fig. 1 is a diagram showing a navigation system according to the invention.

In Fig. 1, an azimuth sensor 1 detects a running azimuth of a vehicle as a moving vehicle, an angular velocity sensor 2 detects an angular velocity of the vehicle, and a distance sensor 3 detects a running distance of the vehicle. A GPS (Global Positioning System) 4 detects the absolute position of the vehicle from latitude and longitude information or the like obtained by using radio waves transmitted from a position measuring artificial satellite. Detection outputs of the sensors (apparatuses) are supplied to a system controller 5. As the azimuth sensor 1, for example, a geomagnetism sensor for detecting the running azimuth of the vehicle by geomagnetism (earth magnetic field) is used. The distance sensor 3 is constituted by a pulse generator for generating a pulse every rotation of a predetermined angle of a drive shaft (not shown) of the vehicle. The pulse generator is a known generator for magnetically or optically detecting a rotational angle position of the drive shaft and generating pulses.

The system controller 5 is a so called computer which comprises: an interface 6 for receiving detection outputs of the sensors (apparatuses) 1 to 4 and executing a process such as A/D (analog/digital) conversion or the like; a CPU (central processing unit) 7 for performing various image data processes and executing arithmetic operations of the running distance, running azimuth, coordinates (longitude, latitude) of the current position, and the like, of the vehicle based on the output data of the sensors (apparatuses) 1 to 4 which is sequentially transmitted from the interface 6; an ROM (read only memory) 8 in which various processing programs of the CPU 7 and other necessary information have been preliminarily written; and RAMs (random access memories) 9 and 22 to and from which information necessary to execute the programs are written and read out.

In an external storage device 11, in addition to map data in which points on roads in a map are converted into digital values (numerical values), longitude and latitude data showing a range of each road unit as road information, which will be described below, connecting relation data among the road units, and location display pattern data have been preliminarily stored. Further, in the external storage device 11, various programs for executing the operation of the invention, which will be described below, have been preliminarily stored. Actually, the various data and programs have been preliminarily recorded in a CD-ROM, a DVD-ROM, or the like as a recording medium set in the external storage device 11. As a recording medium, a DAT, an IC card, or the like can be also used. The writing and reading operations of the external storage device 11 are controlled by the CPU 7. In this case, the various data and programs read out from the external storage device 11 are fetched into the system controller 5 via a bus line 23.

A display apparatus 16 comprises: a display 17 such as a CRT or the like; a graphic memory 18 such as a V (Video)-RAM or the like; a graphic controller 19 for drawing map data sent from the system controller 5 as image data into the graphic memory 18 and outputting the image data; and a display controller 20 for controlling so as to display a map on the display 17 on the basis of the image data outputted from the graphic controller 19. An input device 21 is constituted by a keyboard or the like and various commands and the like are generated to the system controller 5 by a key operation of the user.

The CPU 7 executes a program supplied via the bus line 23 as mentioned above.

The operation which is executed by the program will now be described hereinbelow.

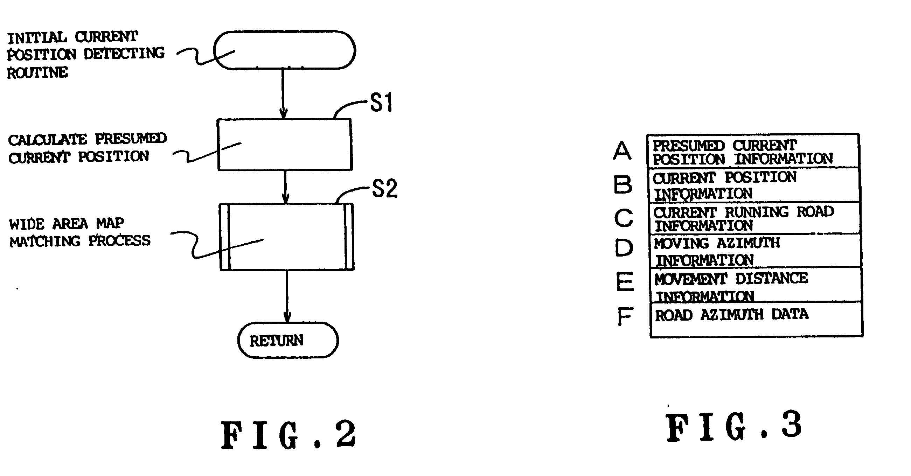

The CPU 7 exits from the operation of a main flow (which is not explained) which is being executed currently in response to the start of the movement of a vehicle and advances to the execution of the initial current position detecting routine as shown in Fig. 2.

In Fig. 2, first, the CPU 7 calculates the presumed current position of the vehicle based on the output data from each of the azimuth sensor 1, angular velocity sensor 2, distance sensor 3, and GPS 4 by using the dead-reckoning navigation. The CPU 7 stores the calculated presumed current position into the built-in register A in the CPU 7 as shown in Fig. 3 (step S1). After the step S1, the CPU 7 proceeds to a wide area map matching processing routine (step S2).

In the wide area map matching process, first, the CPU 7 reads out map data of an ambient area including the presumed current position from the external storage device 11. Subsequently, the CPU 7 selects all of roads existing in a predetermined area (for example, in a range within the radius of 300 meters) around the presumed current position as a center from road data existing in map data of the ambient area. The CPU 7 then retrieves a road existing at a position that is the closest to the presumed current position from among the selected roads and determines that the retrieved road is the road on which the vehicle is running. In this case, the CPU 7 stores current running road information indicative of the road which has been determined to be the road on which the vehicle is running currently into the built-in register C in the CPU 7 as shown in Fig. 3. The CPU 7 uses the position that is the closest to the presumed current position on the road shown by the current running road information as a final current position of the vehicle and stores the current position information indicative of the current position into the built-in register B in the CPU 7 as shown in Fig. 3. Subsequently, the CPU 7 causes the display, on the display 17, of the position where the current position mark has been added to the position shown by the current position information on the map data of the ambient area.

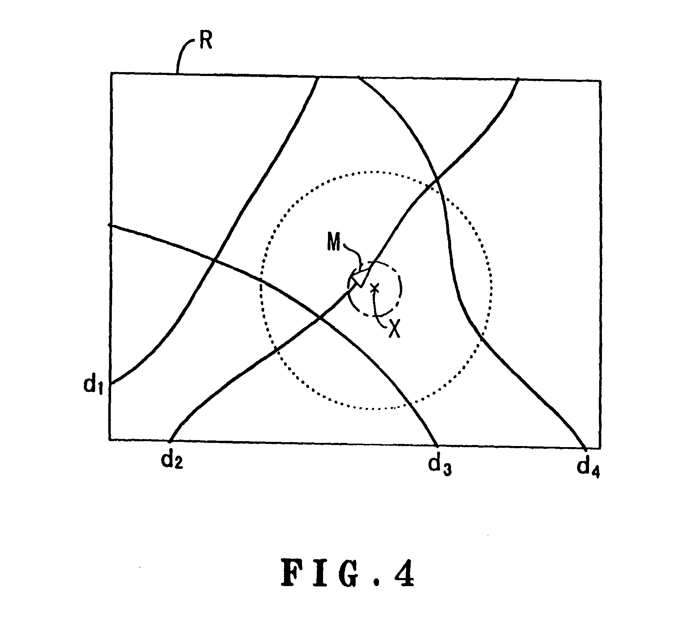

An example of the operation by the wide area map matching process will be described hereinafter with reference to Fig. 4.

In Fig. 4, the presumed current position of the vehicle is shown by (X) and the map data of the ambient area including the presumed current position (X) is shown by (R). From roads d₁ to d₄, the CPU 7 selects all of roads existing in map data (R), that is, roads existing in a predetermined area around the presumed current position (X) as a center, that is, roads existing in a broken line circle in Fig. 4. That is, the roads d₂ to d₄ are selected from the roads d₁ to d₄. The CPU 7 retrieves the road d₂ existing at a position that is the closest to the presumed current position (X) from the selected roads. The CPU 7 displays the map data (R) as shown in Fig. 4 in which a current position mark (M) indicative of the current position of the vehicle is added to the position that is the closest to the presumed current position (X) on the retrieved road d₂ onto the display 17.

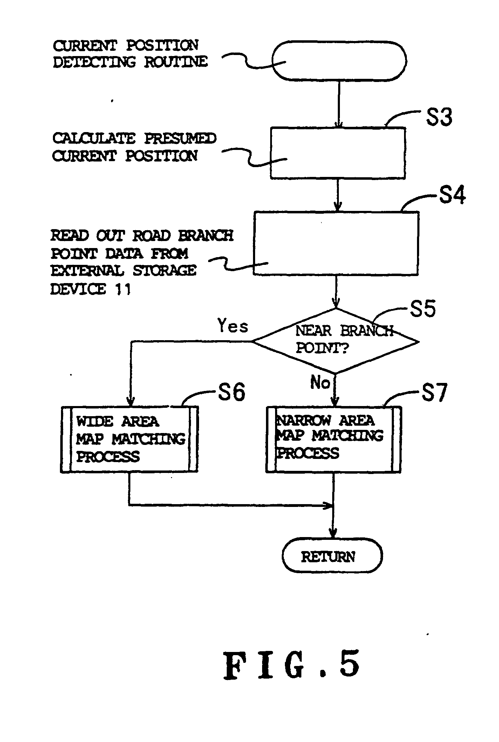

When the wide area map matching process as mentioned above is finished, the CPU 7 exits from the initial current position detecting routine and advances to the current position detecting routine as shown in Fig. 5.

In Fig. 5, first, the CPU 7 calculates the newest presumed current position of the vehicle which is running currently on the basis of the output data from each of the azimuth sensor 1, angular velocity sensor 2, distance sensor 3, and GPS 4. The CPU 7 overwrites and stores the calculated presumed current position into the built-in register A in the CPU 7 as shown in Fig. 3 (step S3). Subsequently, the CPU 7 reads out road branch point data indicative of all of road branch points existing in the ambient area of the current position shown by the current position information stored in the built-in register B in the CPU 7 as shown in Fig. 3 from the external storage device 11 (step S4). The CPU 7 determines whether the current position of the vehicle has approached a position near any one of a plurality of road branch points shown by the road branch point data or not (for example, within a range of 100 meters from the road branch point) (step S5). For example, when a distance from the presumed current position to the next road branch point becomes smaller than a predetermined distance (for instance, 100 meters), it is determined that the vehicle has approached the road branch point.

When it is determined in step S5 that the current position of the vehicle has approached the road branch point, the CPU 7 advances to the wide area map matching processing routine (step S6).

In the wide area map matching process in step S6, the CPU 7 first reads out the map data of the ambient area including the presumed current position indicated by the presumed current position information stored in the built-in register A as shown in Fig. 3 from the external storage device 11. The CPU 7 selects all of roads existing in a predetermined area (for example, within a range of the radius of 300 meters) around the presumed current position as a center among road data existing in the map data of the ambient area. The CPU 7 retrieves a road which exists at a position that is the closest to the presumed current position and in which it is considered that the existence probability of the vehicle is the highest from the selected roads and determines that the retrieved road is the road on which the vehicle is running currently. In this case, the CPU 7 stores current running road information indicative of the road which is determined as a road on which the vehicle is running currently into the built-in register C in the CPU 7 as shown in Fig. 3. The CPU 7 sets the position that is the closest to the presumed current position on the road shown by the current running road information to a final current position of the vehicle and stores the information indicative of the current position into the built-in register B in the CPU 7 as shown in Fig. 3. The CPU 7 allows the position in which the current position mark is added to the position shown by the current position information on the map data of the ambient area to be displayed on the display 17.

The wide area map matching processing routine which is executed by step S6 is the same process as the wide area map matching processing routine executed in step S2 in Fig. 2 as described above.

In step S5, if it is determined that the vehicle is away from any one of the road branch points, the CPU 7 advances to the execution of a narrow area map matching processing routine (step S7).

That is, when the running vehicle approaches near the road branch point, the wide area map matching process as mentioned above is executed. When the vehicle is running at a position away from the road branch point, the narrow area map matching process is executed.

In the narrow area map matching process, the CPU 7 first reads out map data of a ambient area including the above presumed current position (position shown by the information stored in the built-in register A) from the external storage device 11. The CPU 7 subsequently selects all of the roads existing in a micro area (for example, range within a radius of 10 m) around the presumed current position as a center from the road data existing in the map data of the ambient area. The CPU 7 subsequently searches the road which exists at the nearest position of the presumed current position from the selected roads and determines that the searched road is the road where the vehicle is running currently. In this instance, the CPU 7 stores the current running road information showing the road decided as a road where the vehicle is running currently into the built-in register C of the CPU 7 as shown in Fig. 3. The CPU 7 decides the position that is the closest to the presumed current position on the road shown by the current running road information as a final current position of the vehicle. The information indicative of the current position is stored into the built-in register B of the CPU 7 as shown in Fig. 3. The CPU 7 allows the position in which the current position mark is added to the position shown by the current position information on the map data of the ambient area to be displayed on the display 17.

That is, in the narrow area map matching process, an area to be used as a target of the map matching is reduced as compared with that in the wide area map matching process as mentioned above.

For example, in Fig. 4, in the wide area map matching process, the map matching process is executed to the road existing in a predetermined area shown in a circle of a broken line. In the narrow area map matching process, however, the map matching process is performed to the road existing in a micro area shown in a circle of an alternate long and short dash line.

In the narrow area map matching process, therefore, as compared with the wide area map matching process, the number of roads which should become the targets of the map matching process (wide area: roads d₂ to d₄, narrow area: road d₂) is smaller. A higher speed process is, therefore, performed as compared with the wide area map matching process.

As a narrow area map matching process, it is also possible to execute the map matching process while limiting to the road where the vehicle is currently running. By limiting the roads which should be the targets of the map matching process to the road where the vehicle is currently running, the searching process of the road as mentioned above is unnecessary, so that a higher speed process is performed.

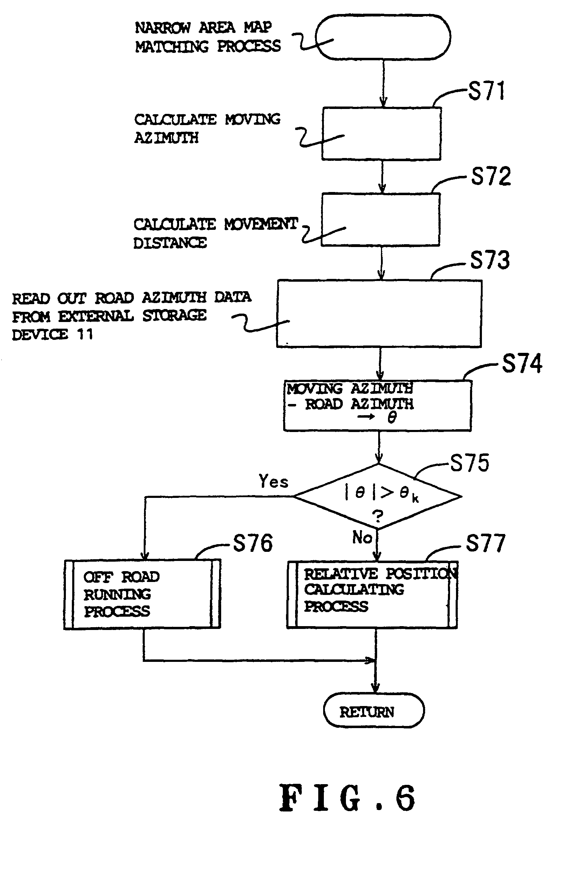

Fig. 6 is a diagram showing an example of a narrow area map matching processing routine performed in consideration of the above point.

In Fig. 6, the CPU 7 first obtains an azimuth of the moving direction of the vehicle which is currently running on the basis of the output data from the azimuth sensor 1 and stores information showing the azimuth of movement into a built-in register D of the CPU 7 as shown in Fig. 3 (step S71). The CPU 7 subsequently obtains a movement distance of the vehicle from the position shown by the current position information stored in the built-in register B on the basis of the output data from the distance sensor 3. Information showing the movement distance is stored into a built-in register E of the CPU 7 as shown in Fig. 3 (step S72). Subsequently, the CPU 7 reads out road data of the road shown by the current running road information stored in the built-in register C from the external storage device 11, extracts road azimuth data showing the road azimuth at the current position shown by the current position information stored in the built-in register B from the road data, and stores into a built-in register F of the CPU 7 as shown in Fig. 3 (step S73). The CPU 7 obtains an angle difference θ obtained by subtracting the road azimuth shown by the road azimuth data from the azimuth of movement indicated by the moving azimuth information (step S74).

The CPU 7 now discriminates whether the absolute value of the angle difference θ is larger than a predetermined angle difference θₖ or not (step S75). In step S75, when it is determined that the absolute value of the angle difference θ is larger than the predetermined angle difference θₖ, the CPU 7 advances the execution of an off road running processing routine (step S76).

That is, when the current azimuth of movement of the vehicle is largely deviated from the road azimuth on the map road at the current position of the vehicle, it is determined by step S75 that the vehicle is running on the road or district which is not registered as road data, thereby executing the off road running process.

In the off road running process, the CPU 7 reads out the map data of the ambient area including the presumed current position shown by the presumed current position information stored in the built-in register A as shown in Fig. 3 from the external storage device 11. The CPU 7 sets the presumed current position shown by the presumed current position information as a final current position of the vehicle and overwrites and stores the current position information showing the current position into the built-in register B of the CPU 7 as shown in Fig. 3. The CPU 7 allows the position on the map data of the ambient area where the current position mark is added to the position shown by the current position information to be displayed on the display 17.

That is, in the off road running process, what is called a map matching such that the "presumed current position is pulled into the map road" is not executed but the presumed current position is determined to be the current position as it is and is displayed as a current position mark on the display 17.

Therefore, even when the vehicle is largely deviated on the road and is running on a woodland path (forestry road) or parking lot which is not registered as map data an erroneous map matching such that the current position is pulled into a near road (registered as map data) is prevented.

In step S75, when it is determined that the absolute value of the angle difference e is smaller than the predetermined angle difference θₖ, the CPU 7 advances to the execution of a relative position calculation processing routine (step S77).

In such a relative position calculating process, the CPU 7 calculates a relative position in which the position shown by the current position information stored in the built-in register B is set to a reference position on the basis of each of the movement distance of the vehicle and the angle data on the map road at the current position stored in the built-in registers C and D in Fig. 3. The CPU 7 sets the calculated position to the final current position of the vehicle and overwrites and stores the information indicative of the current position into the built-in register B of the CPU 7. The CPU 7 allows the position in the map data of the ambient area where the current position mark is added to the position shown by the current position information to be displayed on the display 17.

That is, in the relative position calculating process, the final current position is obtained on the basis of the position on the road obtained previously, the movement distance from this position, and the road azimuth on the map data in the running road interval. The position obtained by the relative position calculating process, therefore, is certainly pulled onto the map road.

When either the relative position calculating process in step S77 shown in Fig. 6 or the off road running process in step S76 is finished, the CPU 7 skips the narrow area map matching processing routine as shown in Fig. 6 and is returned to the current position detecting routine shown in Fig. 5.

In the current position detecting routine shown in Fig. 5, when the execution of either the narrow area map matching process in step S7 or the wide area map matching process in step S6 is finished, the CPU 7 skips the current position detecting routine and returns to the operation of a main flow (not shown). In this instance, the current position detecting routine shown in Fig. 5 is repeatedly executed every predetermined period during the execution of the main flow.

In the embodiment, although the various programs shown in Figs. 2, 5, and 6 are previously stored into recording media such as CD-ROM and DVD-ROM loaded in the external storage device 11, they can be also stored in the ROM 8.

As mentioned above, in the invention, when the vehicle is running near the road branch point, the wide area map matching process with respect to all of the roads displayed on the map as targets is executed. When the vehicle is running at a position away from the road branch point, the narrow area map matching process in which the area to be processed as a target is narrowed is executed, thereby reducing the processing time.

Further, when the current azimuth of movement of the vehicle is largely deviated from the road azimuth on the map road at the current position of the vehicle, it is determined that the vehicle is running on a road or in a district which is not registered as road data, and the presumed current position is displayed as it is as a current position. Even in the case, therefore, where the vehicle is largely deviated from the road and runs in a woodland path or parking lot which is not registered as map data, an erroneous map matching such that the current position is pulled in a near road (registered as map data) is prevented and the accurate current position display can be performed.

According to the navigation system of the invention, therefore, the high speed map matching process is accurately executed not only during the running on the road but also during the running in a woodland path away from the road or in a parking lot or the like.

## Claims

1. A navigation system for obtaining a current position of a moving vehicle through a map matching correction of a presumed current position of the moving vehicle obtained based on a dead-reckoning navigation, said system comprising:
wide area map matching processing means for obtaining a first position as said current position, said first position being on a road existing at a position that is the closest to said presumed current position among roads existing in a first area containing said presumed current position;
narrow area map matching processing means for obtaining a second position as said current position, said second position being on a road existing at a position that is the closest to said presumed current position among roads existing in a second area smaller than said first area; and
control means for alternately causing either one of said wide area map matching processing means and said narrow area map matching processing means to operate based on map data around said presumed current position.

2. A system according to claim 1, wherein said control means causes said wide area map matching processing means to operate when said moving vehicle exists near a road branch point and causes said narrow area map matching processing to operate when said moving vehicle exists at a position away from the road branch point.

3. A system according to claim 1 or 2, wherein said wide area map matching processing means determines a road existing at a position that is the closest to said presumed current position among roads existing in said first area as a current running road and obtains said first position on said current running road as said current position.

4. A system according to any of claims 1 to 3, wherein said narrow area map matching processing means determines a road existing at a position that is the closest to said presumed current position among roads existing in said second area as a current running road and obtains said second position on said current running road as said current position.

5. A system according to any of claims 1 to 4, wherein said first and second area are centered on said presumed current position.

6. A system according to any of claims 3 to 5, wherein said narrow area map matching processing means obtains a new current position of said moving vehicle on the basis a road azimuth on said current running road at said current position and a movement distance of said moving vehicle from said current position.

7. A system according to claim 6, wherein said narrow area map matching processing means has off road running processing means for deriving said presumed current position as an ultimate current position of said moving vehicle as it is when an angle difference between an azimuth of movement of said moving vehicle and a road azimuth is larger than a predetermined angle difference.

8. A recording medium for a navigation system having a computer, wherein a program is recorded on said recording medium, causing said computer to execute an operation including:
a process of obtaining a presumed current position of a moving vehicle based on a dead-reckoning navigation;
a wide area map matching process for obtaining a first position as said current position, said first position being on a road existing at a position that is the closest to said presumed current position among roads existing in a first area containing said presumed current position; and
a narrow area map matching process for obtaining a second position as said current position, said second position being on a road existing at a position that is the closest to said presumed current position among roads existing in a second area smaller than said first area; and
a control step for alternately performing either one of said wide area map matching process and said narrow area map matching process based on map data around said presumed current position.

## Patentansprüche

1. Navigationssystem zum Erhalten einer momentanen Position eines sich bewegenden Fahrzeugs durch eine Kartenanpassungskorrektur einer im Voraus angenommenen momentanen Position des sich bewegenden Fahrzeugs, die auf der Grundlage einer Besteckrechnungsnavigation erhalten wird, wobei das System umfasst:
eine Weitbereichskarten-Anpassungsverarbeitungseinrichtung, die eine erste Position als eine momentane Position erhält, wobei sich die erste Position auf einer Fahrbahn befindet, die sich an einer Position befindet, die unter den Fahrbahnen, die in einem die im Voraus angenommene momentane Position enthaltenden ersten Bereich vorhanden sind, der im Voraus angenommenen momentanen Position am nächsten kommt;
eine Kleinbereichskarten-Anpassungsverarbeitungseinrichtung, die eine zweite Position als eine momentane Position erhält, wobei sich die zweite Position auf einer Fahrbahn befindet, die sich an einer Position befindet, die unter den Fahrbahnen, die in einem zweiten Bereich, der kleiner als der erste Bereich ist, vorhanden sind, der im Voraus angenommenen Position am nächsten kommt; und
eine Steuereinrichtung, die abwechselnd entweder die Weitbereichskartenanpassung-Verarbeitungseinrichtung oder die Kleinbereichskartenanpassung-Verarbeitungseinrichtung dazu veranlasst, auf der Grundlage von Kartendaten um die im Voraus angenommene momentane Position zu arbeiten.

2. System nach Anspruch 1, bei dem die Steuereinrichtung die Weitbereichskartenanpassung-Verarbeitungseinrichtung zum Arbeiten veranlasst, wenn sich das sich bewegende Fahrzeug in der Nähe eines Fahrbahnverzweigungspunkts befindet, und die Kleinbereichskartenanpassung-Verarbeitungseinrichtung zum Arbeiten veranlasst, wenn das sich bewegende Fahrzeug an einer Position entfernt von dem Fahrbahnverzweigungspunkt befindet.

3. System nach Anspruch 1 oder 2, bei dem die Weitbereichskartenanpassung-Verarbeitungseinrichtung eine Fahrbahn, die an einer Position vorhanden ist, die unter den Fahrbahnen, die in dem ersten Bereich vorhanden sind, der im Voraus angenommenen momentanen Position am nächsten kommt, als eine momentan befahrene Fahrbahn bestimmt und die erste Position auf der momentan befahrenen Fahrbahn als die momentane Position erhält.

4. System nach einem der Ansprüche 1 bis 3, bei dem die Kleinbereichskartenanpassung-Verarbeitungseinrichtung eine Fahrbahn, die an einer Position vorhanden ist, die unter den Fahrbahnen, die in dem zweiten Bereich vorhanden sind, der im Voraus angenommenen momentanen Position am nächsten kommt, als eine momentan befahrene Fahrbahn bestimmt und die zweite Position auf der momentan befahrenen Fahrbahn als die momentane Position erhält.

5. System nach einem der Ansprüche 1 bis 4, bei dem der erste und der zweite Bereich auf die im Voraus angenommene momentane Position zentriert sind.

6. System nach einem der Ansprüche 3 bis 5, bei dem die Kleinbereichskartenanpassung-Verarbeitungseinrichtung eine neue momentane Position des sich bewegenden Fahrzeugs auf der Grundlage eines Fahrbahn-Azimuts auf der momentan befahrenen Fahrbahn an der momentanen Position und auf der Grundlage einer Bewegungsstrecke des sich bewegenden Fahrzeugs beginnend bei der momentanen Position erhält.

7. System nach Anspruch 6, bei dem die Kleinbereichskartenanpassung-Verarbeitungseinrichtung eine Geländefahrt-Verarbeitungseinrichtung besitzt, die die im Voraus angenommene momentane Position als eine endgültige momentane Position des sich bewegenden Fahrzeugs unverändert ableitet, wenn eine Winkeldifferenz zwischen dem Azimut der Bewegung des sich bewegenden Fahrzeugs und einem Fahrbahnazimut größer als eine vorgegebene Winkeldifferenz ist.

8. Aufzeichnungsmedium für ein Navigationssystem, das einen Computer besitzt, wobei auf das Aufzeichnungsmedium ein Programm aufgezeichnet ist, das den Computer dazu veranlasst, eine Operation auszuführen, die umfasst:
einen Prozess, bei dem eine im Voraus angenommene momentane Position eines sich bewegenden Fahrzeugs auf der Grundlage einer Besteckrechnungsnavigation erhalten wird;
einen Weitbereichskartenanpassungsprozess, bei dem eine erste Position als die momentane Position erhalten wird, wobei sich die momentane Position auf einer Fahrbahn befindet, die an einer Position vorhanden ist, die unter den in einem die im Voraus angenommene Position enthaltenden ersten Bereich vorhandenen Fahrbahnen der im Voraus angenommenen momentanen Position am nächsten kommt; und
einen Kleinbereichskartenanpassungsprozess, bei dem eine zweite Position als die momentane Position erhalten wird, wobei sich die zweite Position auf einer Fahrbahn befindet, die an einer Position vorhanden ist, die unter den Fahrbahnen, die in einem zweiten Bereich, der kleiner als der erste Bereich ist, vorhanden sind, der im Voraus angenommenen momentanen Position am nächsten kommt; und
einen Steuerschritt, bei dem abwechselnd entweder der Weitbereichskartenanpassungsprozess oder der Kleinbereichskartenanpassungsprozess auf der Grundlage von Kartendaten um der im Voraus angenommenen momentanen Position ausgeführt wird.

## Revendications

1. Système de navigation pour obtenir une position actuelle d'un véhicule en mouvement par l'intermédiaire d'une correction de correspondance à une carte d'une position actuelle présumée du véhicule en mouvement obtenue sur la base d'une navigation à l'estime, ledit système comprenant :
des moyens de traitement de mise en correspondance avec une carte de zone étendue pour obtenir une première position en tant que dite position actuelle, ladite première position étant sur une route existant à une position qui est la plus proche de ladite position actuelle présumée parmi les routes existant dans une première zone contenant ladite position actuelle présumée ;
des moyens de traitement de mise en correspondance avec une carte de zone réduite pour obtenir une deuxième position en tant que dite position actuelle, ladite deuxième position étant sur une route existant à une position qui est la plus proche de ladite position actuelle présumée parmi les routes existant dans une deuxième zone plus petite que ladite première zone ; et
des moyens de contrôle pour, alternativement, amener les uns ou les autres desdits moyens de traitement de mise en correspondance avec une carte de zone étendue et desdits moyens de traitement de mise en correspondance avec une carte de zone réduite à fonctionner sur la base de données de carte autour de ladite position actuelle présumée.

2. Système selon la revendication 1, dans lequel lesdits moyens de contrôle amènent lesdits moyens de traitement de mise en correspondance avec une carte de zone étendue à fonctionner lorsque ledit véhicule en mouvement est présent à proximité d'un point d'embranchement de routes et amènent lesdits moyens de traitement de mise en correspondance avec une carte de zone réduite à fonctionner lorsque ledit véhicule en mouvement est présent à une position éloignée du point d'embranchement de routes.

3. Système selon la revendication 1 ou 2, dans lequel lesdits moyens de traitement de mise en correspondance avec une carte de zone étendue déterminent une route existant à une position qui est la plus proche de ladite position actuelle présumée parmi les routes existant dans ladite première zone en tant que route de circulation actuelle et obtiennent ladite première position sur ladite route de circulation actuelle en tant que dite position actuelle.

4. Système selon l'une quelconque des revendications 1 à 3, dans lequel lesdits moyens de traitement de mise en correspondance avec une carte de zone réduite déterminent une route existant à une position qui est la plus proche de ladite position actuelle présumée parmi les routes existant dans ladite deuxième zone en tant que route de circulation actuelle et obtiennent ladite deuxième position sur ladite route de circulation actuelle en tant que dite position actuelle.

5. Système selon l'une quelconque des revendications 1 à 4, dans lequel lesdites première et deuxième zones sont centrées sur ladite position actuelle présumée.

6. Système selon l'une quelconque des revendications 3 à 5, dans lequel lesdits moyens de traitement de mise en correspondance avec une carte de zone réduite obtiennent une nouvelle position actuelle dudit véhicule en mouvement sur la base d'un azimut de route sur ladite route de circulation actuelle à ladite position actuelle et d'une distance de déplacement dudit véhicule en mouvement par rapport à ladite position actuelle.

7. Système selon la revendication 6, dans lequel lesdits moyens de traitement de mise en correspondance avec une carte de zone réduite comportent des moyens de traitement de circulation hors route pour déduire ladite position actuelle présumée en tant que position actuelle finale dudit véhicule en mouvement tel qu'il est lorsqu'une différence angulaire entre un azimut de déplacement dudit véhicule en mouvement et un azimut de route est supérieure à une différence angulaire prédéterminée.

8. Support d'enregistrement pour un système de navigation comportant un ordinateur, dans lequel un programme est enregistré sur ledit support d'enregistrement, amenant ledit ordinateur à exécuter une opération comprenant :
un processus d'obtention d'une position actuelle présumée d'un véhicule en mouvement sur la base d'une navigation à l'estime ;
un processus de mise en correspondance avec une carte de zone étendue pour obtenir une première position en tant que dite position actuelle, ladite première position étant sur une route existant à une position qui est la plus proche de ladite position actuelle présumée parmi les routes existant dans une première zone contenant ladite position actuelle présumée ; et
un processus de mise en correspondance avec une carte de zone réduite pour obtenir une deuxième position en tant que dite position actuelle, ladite deuxième position étant sur une route existant à une position qui est la plus proche de ladite position actuelle présumée parmi les routes existant dans une deuxième zone plus petite que ladite première zone ; et
une étape de contrôle pour effectuer, alternativement, l'un ou l'autre dudit processus de mise en correspondance avec une carte de zone étendue et dudit processus de mise en correspondance avec une carte de zone réduite sur la base de données de carte autour de ladite position actuelle présumée.
